# EUROPÄISCHE PATENTSCHRIFT

(11) **EP 0 940 458 B1**
(45) Veröffentlichungstag und Bekanntmachung des Hinweises auf die Patenterteilung: **21.07.2004**
(21) Anmeldenummer: 99103136.0
(22) Anmeldetag: 18.02.1999
(51) Int. Cl.: C09D 183/06, C08G 77/38

(54) **Verwendung von (Meth)Acrylatester von Organosiloxanpolyolen als Additive für strahlenhärtende Beschichtungen**
Use of (meth)acrylate ester of organosiloxanepolyols as additive for radiation curable coatings
Utilisation d'ester de (meth)acrylate de polyols d'organosiloxane comme additif pour revêtements durcissables par rayonnement

(30) Priorität: 03.03.1998 DE 19808785
(43) Veröffentlichungstag der Anmeldung: 08.09.1999
(73) Patentinhaber: Goldschmidt AG, 45127 Essen (DE)
(72) Erfinder: Döhler, Hardi, 45525 Hattingen (DE); Ebbrecht, Thomas Dr., 58455 Witten (DE); Silber, Stefan Dr., 47804 Krefeld (DE); Stadtmüller, Stefan Dr., 45141 Essen (DE)

(56) Entgegenhaltungen:
- EP-A- 0 336 141
- EP-A- 0 644 222
- EP-A- 0 719 836
- EP-A- 0 819 719
- DE-C- 19 649 844
- US-A- 4 640 940

## Beschreibung

Gegenstand der Erfindung ist die Verwendung neuartiger Organosiliciumverbindungen, die end- und/oder seitenständig mindestens einen Si-C-gebundenen organischen Rest mit mindestens zwei über primäre Hydroxylgruppen gebundene (Meth)Acrylatgruppen und gegebenenfalls Monocarbonsäuregruppen, welche frei von zur Polymerisation befähigten Doppelbindungen sind, enthalten, als Additive für strahlenhärtende Beschichtungen.

Die Bindung der Acrylatgruppen enthaltenden Reste mit dem Gerüst des Organosiloxans erfolgt im wesentlichen über Si-C-Bindungen unter Vermeidung von Si-O-C-Verknüpfungen.

Die (Meth)Acrylatgruppen enthaltenden Organopolysiloxane weisen ausgezeichnete Eigenschaften als Additive in strahlenhärtenden Beschichtungen, insbesondere Druckfarben, auf. Diese Beschichtungen besitzen neben guten Release-Eigenschaften eine verbesserte Kratzfestigkeit und erhöhte Gleitfähigkeit.

Keine Emissionen, geringe Investitionen und niedrigerer Energiebedarf durch kurze Trockenanlagen, hohe Produktionszahlen dank schneller Härtung und in vielen Fällen eine bessere Qualität der Beschichtung, vor allem hinsichtlich Glanz und Abriebfestigkeit, sind die Gründe dafür, daß auf dem Gebiet der Industrielacke die Strahlenhärtung die expansivste Applikationsform darstellt.

Strahlenhärtende Beschichtungen sind bekannt und beispielsweise in "UV & EB curing formulation for printing inks, coatings & paints" (R. Holman, P. Oldring, London 1988) beschrieben.

Ihre Eigenschaften sind ursächlich mit den zugrunde liegenden Oligomeren verknüpft. Dabei basieren die meisten der kommerziell erhältlichen Oligomeren, die in strahlenhärtenden (UV/EB)-Systemen Anwendung rinden, auf modifizierten Acrylaten (Mw = 300 bis 2000 g/Mol).

Die vor allem für Papierbeschichtungen häufig verwendeten Epoxyacrylate werden aufgrund der raschen Härtung sowie der erzielbaren Härte und Chemikalienbeständigkeit geschätzt. Für hochwertige Beschichtungen werden auch Urethanacrylate eingesetzt, die neben einer verbesserten Flexibilität insbesondere ein ausgezeichnetes Benetzungsverhalten sowie Chemikalienresistenz und Härte bedingen.

Durch die Verwendung von Polyetheracrylaten kann hingegen leichter eine gewünschte niedrigere Verarbeitungsviskosität erreicht werden. Allerdings müssen hier Einbußen hinsichtlich der obengenannten Eigenschaften akzeptiert werden.

Weitere Rezepturbestandteile sind ein oder mehrere Photoinitiatoren, Pigment(e) sowie ein funktionelles, häufig auch multifunktionelles Monomer mit einem Molekulargewicht Mw bis zu 300 g/Mol als Reaktivverdünner, der die Viskosität des Systems an die Verarbeitungsbedingungen anpaßt.

Ein wichtiges Einsatzgebiet neben der holzverarbeitenden Industrie sind Druckfarben für Papier, wie sie zum Beispiel für das Bedrucken von Schallplattenhüllen, Buchdeckeln, Ansichts- und Kunststoffpostkarten sowie hochwertigen Katalogen verwendet werden. Bei der industriellen Herstellung dieser Druckerzeugnisse bereitet die Handhabung dieser Gegenstände Schwierigkeiten. So ist es nicht immer zu vermeiden, daß die nach der durch Strahlung induzierten Aushärtung der Farbe gestapelten Elemente Schäden an der Oberfläche erleiden.

Bei der Herstellung bedruckter Verpackungsmaterialien ist darüber hinaus eine rasche Release-Wirkung der Druckfarbe wünschenswert, so daß kurz nach dem Druckvorgang aufgebrachte Etiketten oder Codierungen zu einem späteren Zeitpunkt ohne Beschädigung des Druckbildes wieder entfernt werden können.

Man hat bereits versucht, die Handhabbarkeit frisch gedruckter Gegenstände dadurch zu verbessern, daß man der Druckfarbe reibungsmindernde Zusätze, wie Öle oder Wachse (z. B. Polyethylenoder Polytetrafluorethylenwachse), zugesetzt oder diese nachträglich auf die gedruckten Oberflächen aufgebracht hat. Häufig führt dies zu einem störenden Glanzverlust. Das nachträgliche Aufbringen von Wachs auf das Druckerzeugnis kann auch nicht immer befriedigen, zumal durch diesen zusätzlichen Verfahrensschritt die Fertigungskosten erhöht werden. Auch werden hohe Einsatzkonzentrationen benötigt, um eine Verbesserung der Kratzfestigkeit zu erzielen. Eine signifikante Release-Wirkung wird so nicht erzielt.

Ähnlich wie in lufttrocknenden oder forciert (Temperatur) trocknenden Systemen werden heute auch Siliconöle oder auch organisch modifizierte Siloxane, wie z. B. Polyethersiloxane, zu diesen Zwecken eingesetzt. Diese werden jedoch bei der strahlungsinduzierten Vernetzungsreaktion nicht chemisch in den Film eingebaut, so daß diese Zusätze aufgrund ihrer Inkompatibilität mit der Zeit an der Oberfläche ausschwimmen, und das Silicon zum einen zum Beispiel bei erneuten Druckprozessen an Stellen gelangen kann, an denen es störend wirkt, und zum anderen der Effekt der verbesserten Kraftzfestigkeit bestenfalls temporärer Natur ist. Insbesondere ist nicht gänzlich zu vermeiden, daß bei Stapelvorgängen das Siliconadditiv an die Rückseite des darüberliegenden Druckerzeugnisses gelangt.

In der Verpackungsindustrie ist darüber hinaus darauf zu achten, daß durch den Additivzusatz dem Druckerzeugnis in möglichst kurzer Zeit ein Release-Effekt verliehen wird, so daß aufgeklebte Etiketten oder Codierungen nachträglich ohne Beschädigung des Druckerzeugnisses entfernt werden können.

Es besteht daher in der Praxis ein Bedarf an vernetzbaren, modifizierten Siliconzusatzmitteln, welche in geringen Konzentrationen die Handhabbarkeit von insbesondere serienmäßig bedruckten Gegenständen verbessern, wobei diese Zusatzmittel insbesondere die Kratzfestigkeit der frischen Oberflächen verbessern, deren Gleitfähigkeit erhöhen, sehr rasch nach Vernetzung eine hohe Release-Wirkung aufweisen und aufgrund ihrer Vernetzung stationär im Film verbleiben. Dabei sollen derartige Zusatzmittel von der Art und Zusammensetzung der Druckfarbe, der sie zur Verbesserung der vorgenannten Eigenschaften zugesetzt werden, weitgehend unabhängig und universell anwendbar sein. Diese Additive sollen in möglichst geringen Mengen wirksam sein und die anwendungstechnischen Eigenschaften der Druckfarbe nicht verschlechtern. Sie sollen insbesondere nicht die Ausbildung des Oberflächenfilmes und die Aushärtung der Druckfarbe beeinträchtigen. Sie dürfen ferner keinen nachteiligen Effekt auf die Stabilität der Druckfarbe haben und dürfen die Verlaufeigenschaften nicht verschlechtern.

Polysiloxane, die Acrylatsäureestergruppen (Acrylatgruppen) enthalten, haben sich als unter energiereicher Strahlung härtbare Additive, z. B. für Druckfarben und zur Herstellung von Lackbindemitteln oder für Beschichtungsmittel für Kunststoff-, Papier-, Holz- und Metalloberflächen, bewährt. Die Härtung erfolgt insbesondere durch UV-Strahlung (nach Zusatz bekannter Photoinitiatoren, wie z. B. Benzophenon und seine Derivate) oder durch Elektronenstrahlung.

Die Darstellung von Organosiloxanen mit acrylatmodifizierten organischen Gruppen, die über Si-O- und/oder über Si-C-Bindungen an die Siloxaneinheit gebunden sind, ist in zahlreichen Patentschriften beschrieben. Stellvertretend werden zum Stand der Technik die folgenden Patent- und Offenlegungsschriften genannt.

Organopolysiloxane, bei denen die acrylathaltigen organischen Gruppen über eine Si-O-C-Bindung mit dem Polysiloxangerüst verbunden sind, können nach einem Verfahren der DE-C-27 47 233 durch Umsetzung von -COH-Gruppen aufweisenden (Meth)Acrylsäureestern mit Organopolysiloxanen, die SiX-Gruppen (X = Alkoxy-, Hydroxy- oder Chlorrest) aufweisen, dadurch hergestellt werden, daß man als Organopolysiloxane solche der Formel 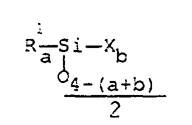
- R¹ =: Alkylgruppe mit 1 bis 4 C-Atomen und/oder eine Phenylgruppe,
- X =: Chlor oder eine OR²-Gruppe,
- R² =: Alkylgruppe mit 1 bis 4 C-Atomen und/cder Wasserstoff,
- a =: 1,0 bis 2,0,
- b =: 0,02 bis 1,6,
- a+b ≤: 2,66,
wobei das Siloxanmolekül 3 bis 100 Si-Atome aufweist, und als (Meth)Acrylsäureester Pentaerythrittri(meth)acrylat verwendet,
wobei, bezogen auf COH- und SiX-Gruppen, 0,05 Mol bis äquimolare Mengen des Pentaerythritesters eingesetzt werden.

In einer Modifizierung dieses Verfahrens verfährt man entsprechend der DE-C-29 48 708 in der Weise, daß man Organopolysiloxane der Formel 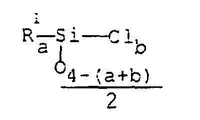 (R¹ = Alkyl mit 1 bis 4 Kohlenstoffatomen, Vinyl und/oder Phenyl, mit der Maßgabe, daß mindestens 90 Mol-% der Gruppen R¹ Methyl sind, a = Wert von 1,8 bis 2,2, b = Wert von 0,004 bis 0,5) zunächst mit, bezogen auf SiCl-Gruppen, mindestens 2molaren Mengen eines Dialkylamins, dessen Alkylgruppen jeweils 3 bis 5 C-Atome aufweisen, und wobei die dem Stickstoff benachbarten C-Atome höchstens jeweils ein Wasserstoffatom tragen, umsetzt und das Umsetzungsprodukt mit mindestens äquimolaren Mengen Pentaerythrittriacrylat oder Pentaerythrittrimethacrylat reagieren läßt und dann das Verfahrensprodukt von in diesem suspendierten festen Bestandteilen in an sich bekannter Weise abtrennt.

Es ist dem Fachmann geläufig, daß die acrylatmodifizierten Organopolysiloxane, bei denen die organischen Gruppen, welche den oder die Acrylatreste tragen, über Si-C-Bindungen mit dem Siloxangerüst verbunden sind, hinsichtlich der Hydrolysestabilität den Verbindungen überlegen sind, bei denen die Verknüpfung über eine Si-C-C-Bindung erfolgt ist.

Organopolysiloxane, bei denen die acrylesterhaltigen organischen Gruppen über Si-C-Bindungen mit dem Polysiloxangerüst verbunden sind, können z. B. dadurch hergestellt werden, daß man an ein Wasserstoffsiloxan Allylglycidether oder ein anderes geeignetes Epoxid mit einer olefinischen Doppelbindung addiert und nach der Anlagerung das Epoxid mit Acrylsäure unter Öffnung des Epoxidringes verestert. Diese Verfahrensweise ist in der DE-C-38 20 294 beschrieben.

Eine weitere Möglichkeit der Herstellung acrylatmodifizierter Polysiloxane mit Si-C-Verknüpfung der modifizierenden Gruppe(n) besteht darin, daß man an ein Wasserstoffsiloxan einen Alkohol mit einer olefinischen Doppelbindung, z. B. Allylalkohol, in Gegenwart eines Platinkatalysators, addiert und dann die OH-Gruppe dieses Alkohols mit Acrylsäure oder einem Gemisch von Acrylsäure und anderen gegebenenfalls gesättigten Säuren umsetzt. Diese Verfahrensweise ist z. B. in der DE-C-38 10 140 beschrieben.

Durch die zuvor beschriebenen Verfahrensweisen ist es jedoch nur möglich, jeweils eine einzige (Meth)Acrylatgruppe pro Verbindungsglied an das Siloxangerüst zu binden. Um eine möglichst gute Vernetzung, d. h. eine möglichst hohe Anzahl an reaktiven Gruppen, bei gleichzeitig so geringer Modifizierungsdichte am Siloxangerüst wie möglich zu erzielen, wäre es wünschenswert, mehr als eine (Meth)Acrylatgruppe je Verbrückungsglied anbinden zu können.

Darüber hinaus lassen solche Verbindungen die Möglichkeit zu, durch partiellen Austausch von (Meth)Acrylsäureestergruppen durch Monocarbonsäureestergruppen, welche frei von zur Polymerisation befähigten Doppelbindungen sind, die Vernetzungsdichte der Beschichtung gezielt zu beeinflussen, ohne Gefahr zu laufen, die für die Vernetzung notwendige Mindestkonzentration an vernetzungsfähigen reaktiven Gruppen zu unterschreiten.

Solche Verbindungen sollten zugänglich sein durch die Hydrosilylierung von SiH-funktionellen Polysiloxanen an organische Verbindungen mit mindestens drei oder mehr primären Hydroxylgruppen, von denen eine mit einem organischen Rest, welcher eine der Hydrosilylierung zugängliche Doppelbindung enthält, verethert ist, und anschließender Veresterung der freien OH-Gruppen mit (Meth)Acrylsäure oder Gemischen aus (Meth)-Acrylsäure und Monocarbonsäuren, welche keine der Vernetzung zugänglichen Doppelbindungen enthalten.

In der US-A-4 640 940 wird ein Verfahren beschrieben zur Darstellung von Polyorganosiloxanen der allgemeinen Formel 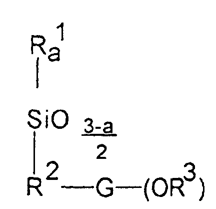 wobei R¹ ein organischer Rest ist, R² eine Alkyl- oder Alkenylgruppe; G ein n + 1-valenter Kohlenwasserstoff, Oxokohlenwasserstoff oder Polyoxokohlenwasserstoffradikal, in dem einige oder alle Wasserstoffatome durch Halogenatome ersetzt sein können; R³ ist H oder eine organofunktionelle Gruppe, besonders eine polymerisierbare organofunktionelle Gruppe, eine Polymerisation beschleunigende cder initiierende Gruppe, n ≥ 2, mit der Maßgabe, daß im Fall n = 2 und einer der Reste R³ = H ist, der andere Rest R³ ebenfalls H ist; a = 0, 1, 2.

Um bei der Darstellung derartiger Verbindungen die Bildung von Si-O-C-verknüpften Nebenprodukten zu unterdrücken, ist es notwendig, die entsprechenden Alkohole vor der Hydrosilylierung in Gegenwart von Hexachloroplatinsäure in ein Ketal zu überführen, wobei nach der Anlagerung, vor der Veresterung, die Schutzgruppe wieder entfernt werden muß. Dies bedeutet zusätzliche Reaktionsschritte, verbunden mit zusätzlichen Energiekosten und Nebenprodukten, welche entsorgt werden müssen.

Ein weiteres Beispiel dieser Patentanmeldung beschreibt die Umkehrung der Reaktionsfolge, indem zuerst der Alkohol mit Methacrylsäure verestert wird und die Anlagerung an das Wasserstoffsiloxan anschließend erfolgt.

Eine Nacharbeitung dieser Verfahrensweisen ergab jedoch, daß die Reaktionen in anderer Weise als beschrieben ablaufen. Während bei einer Addition an die olefinische Doppelbindung ausschließlich Si-C-Verknüpfungen entstehen würden, ergaben u. a. spektroskopische Untersuchungen, daß unter den im ersten Falle angegebenen Verfahrensbedingungen ein erheblicher Anteil an Si-O-C-Verknüpfung (bis zu 50 %) unter Öffnung der Acetaleinheit gebildet worden ist. Auch die Hydrosilylierungsreaktion mit Trimethylolpropanmonoallyletherdimethacrylat erbrachte einen hohen Anteil Si-O-C-verknüpfter Additionsprodukte sowie Additionsprodukte, welche über die Hydrosilylierung der (Meth)-Acrylat-Doppelbindung erhalten wurden, wodurch diese für die anschließende Strahlenvernetzung nicht mehr zur Verfügung steht.

Derartige Produkte können zwar noch durch Strahlung ausgehärtet werden, zeigen aber eine starke Abnahme des Release-Effektes bei der Lagerung. Derartige Produkte sind deshalb als abhäsive Zusatzstoffe nicht verwendbar.

Überraschenderweise wurde gefunden, daß sich die Bildung von Si-O-C-verküpften Nebenprodukten bei der Hydrosilylierung der beschriebenen Polyhydroxyverbindungen effektiv unterdrücken läßt, wenn als Katalysator Komplexverbindungen eingesetzt werden mit Rhodium oder Platin als Zentralatom. Insbesondere haben sich hierbei als Nebenprodukt-unterdrückend Platin- und Rhodiumkatalysatoren der Oxidationsstufen I, II und III, davon besonders bevorzugt Tris(ethylendiamin)rhodium(III), Bis(triphenylphosphin)rhodiumcarbonylchlorid; 2,4-[Rh(C₅H₇O₂)(CO)(PPh₃)]; 2,4-Pentadionatodicarbonylrhodium(I); Tris(2,4-pentadionate)rhodium(III); Acetylacetonatobis (ethylen)rhodium(I); Di-µ-chloro-dichlorobis(cyclohexen) diplatin(II); Di-µ-chloro-dichlorobis(ethylene)diplatin(II); 1,1-Cyclobutandicarboxylatodiamineplatin(II); Dibromo(1,5-cyclooctadiene)platin(II); cis-Dichlorobis(pyridine)platin(II); Dichlorobis(1,5-cyclooctadiene)platin(II); Dichloro(dicyclopentadienyl)platin(II), erwiesen.

Erfindungsgemäß werden daher Organosiloxanyl(meth)acrylate verwendet, die im wesentlichen frei sind von Si-O-C-verknüpften Nebenprodukten.

Diese Organosiloxanyl(meth)acrylate sind erhältlich durch Anlagerung von Organopolysiloxanen der allgemeinen Formel I 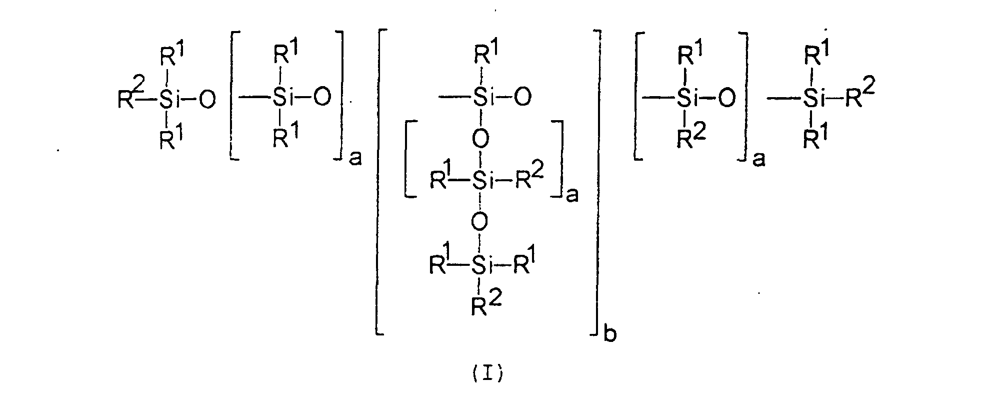
- R¹ =: gleiche oder verschiedene, aliphatische oder aromatische Kohlenwasserstoffreste mit 1 bis 10 C-Atomen,
- R² =: R¹ oder H, mit der Maßgabe, daß mindestens ein Rest R² gleich H ist,
- a =: 0 bis 500,
- b =: 0 bis 5,
an Polyhydroxyalkenylether der allgemeinen Formel II

H₂C=CH-(CH₂)_{c}-O-CH₂-R³-(CH₂-OH)_{d} (II)

- R³=: ein ggf. Etherbrücken enthaltender linearer, cyclischer, aromatischer oder verzweigter Kohlenwasserstoffrest mit 1 bis 20 C-Atomen,
- c =: 0 bis 10,
- d =: 2 bis 10,
in Gegenwart von Platin- oder Rhodiumkatalysatoren und anschließender Umsetzung mit, bezogen auf Hydroxylgruppen, 0,4-bis 1molaren Mengen (Meth)Acrylsäure und 0- bis 0,6molaren Mengen einer Monocarbonsäure mit 2 bis 10 Kohlenstoffatomen, welche frei von zur Polymerisation befähigten Doppelbindungen ist, unter üblichen Veresterungsbedingungen. Die durch die Indices a und b definierte Struktur der hydroxyfunktionellen Organopolysiloxane bleibt auch nach der Umsetzung mit der (Meth)Acrylsäure und anderen Monocarbonsäuren erhalten.

R¹ kann innerhalb des polymeren Moleküls gleich oder verschieden sein und die Bedeutung eines niederen Alkylrestes mit 1 bis 10 C-Atomen oder eines Phenylrestes haben. Die Alkylreste können geradkettig oder verzweigt vorliegen. Vorzugsweise sind mindestens 90 % der Reste R¹ Methylreste. Beispiele für den Rest R³ sind Alkylreste mit 1 bis 20 C-Atomen, bevorzugt 1 bis 10, besonders bevorzugt 3 bis 8 C-Atomen. Der Index c ist vorzugsweise 0 bis 5, d ist vorzugsweise 2 bis 6. Insbesondere bevorzugt ist c = 1 und d = 2 bis 5.

Für die Hydrosilylierung der Polyhydroxyalkenylether der allgemeinen Formel II an die Wasserstoffsiloxan-Ausgangsverbindungen der allgemeinen Formel I eignen sich insbesondere Platin- und Rhodiumkatalysatoren der Oxidationsstufen I, II und III. Als besonders bevorzugt erwiesen haben sich bei den Katalysatoren mit Rhodium als Zentralatom Tris(ethylendiamin)rhodium(III), Bis(triphenylphosphin)rhodiumcarbonylchlorid; 2,4-[Rh(C₅H₇O₂)(CO)(PPh₃)]; 2,4-Pentadionatodicarbonylrhodium(I); Tris(2,4-pentadionate)rhodium(III); Acetylacetonatobis(ethylen)rhodium(I). Bei Katalysatorsystemen mit Platin als Zentralatom haben sich als besonders bevorzugt erwiesen: Di-µchloro-dichlorobis(cyclohexen)diplatin(II); Di-µ-chlorodichlorobis(ethylene)diplatin(II); 1,1-Cyclobutandicarboxylatodiamineplatin(II); Dibromo(1,5-cyclooctadiene)platin(II); cis-Dichlorobis(pyridine)platin(II); Dichlorobis(1,5-cyclooctadiene)platin(II); Dichloro(dicyclopentadienyl)platin(II).

Die Vorteile des Verfahrens bzw. der Organopolysiloxan(meth) acrylate sind somit:
1. Die Bildung von Si-O-C-verknüpften Nebenprodukten wird effektiv unterdrückt, die erhaltenen Produkte besitzen eine ausgezeichnete Lagerstabilität.
2. Es werden keine zusätzlichen Reaktionsschritte für die Einführung bzw. Entfernung von Schutzgruppen benötigt.
3. Je Brückenglied, welches mit dem Siloxangerüst über eine Si-C-Bindung verknüpft ist, kann mehr als eine der Vernetzung zugängliche (Meth)Acrylateinheit angebunden werden, wodurch eine erhöhte Reaktivität bei möglichst geringer Modifizierungsdichte gegeben ist.
4. Durch Wahl des bei der Veresterung eingesetzten Gemisches aus (Meth)Acrylsäure und Monocarbonsäuren, welche keine der Vernetzung zugänglichen Doppelbindungen enthalten, lassen sich im Endprodukt gezielt anwendungstechnische Eigenschaften, wie z. B. Vernetzungsdichte, Glastemperatur, Härte der Beschichtung, einstellen, ohne Gefahr zu laufen, die für die Vernetzung notwendige Mindestkonzentration an vernetzungsfähigen, reaktiven Gruppen zu unterschreiten.

Beispiele für geeignete Polyhydroxyalkenylether der Formel II, die sowohl über mindestens eine hydrosilylierbare Doppelbindung als auch über mindestens zwei veresterbare primäre Hydroxylgruppen verfügen, sind:

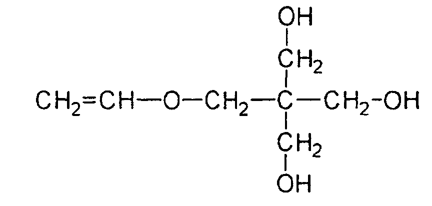

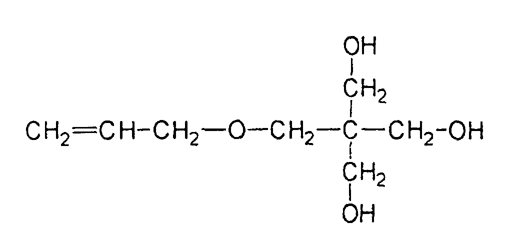

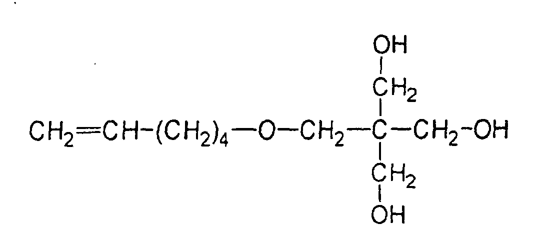

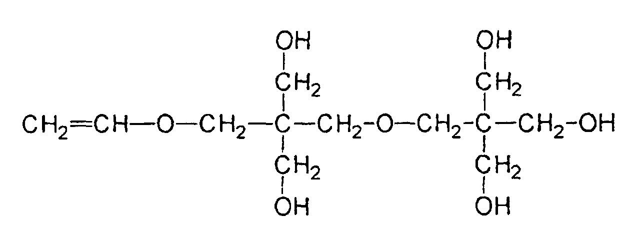

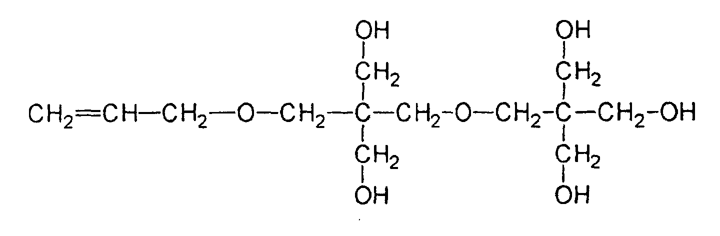

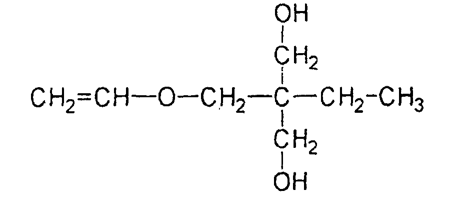

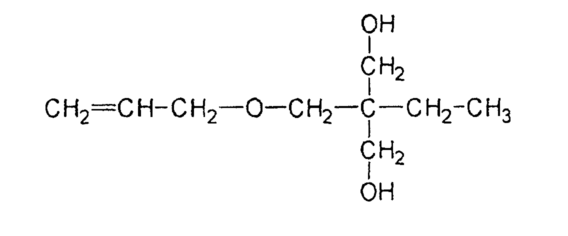

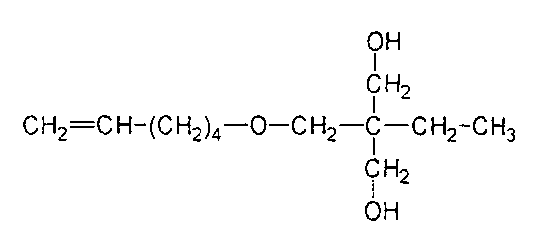

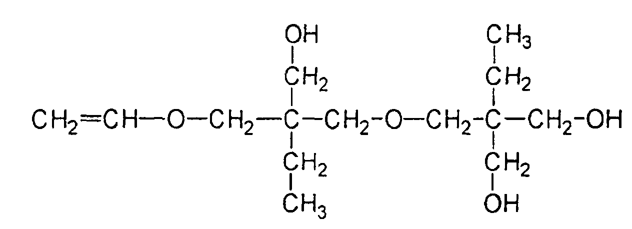

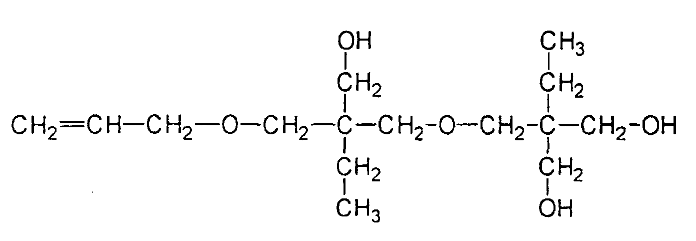

Nach der Veresterungsreaktion mit (Meth)Acrylsäure oder einem Gemisch aus (Meth)Acrylsäure und Carbonsäuren, dem Stand der Technik entsprechend, unter azeotroper Abtrennung der stöchiometrischen Menge an gebildetem Wasser, kann in Gegenwart eines aciden Katalysators das Siloxangerüst auf entsprechend höhere Siloxankettenlängen equilibriert werden.

Es ist dem Fachmann geläufig, daß die Verbindungen in Form eines Gemisches mit einer im wesentlichen durch statistische Gesetze geregelten Verteilung vorliegen. Die Werte für die Indices a und b stellen deshalb Mittelwerte dar.

Beispiele dieser Verbindungen sind:

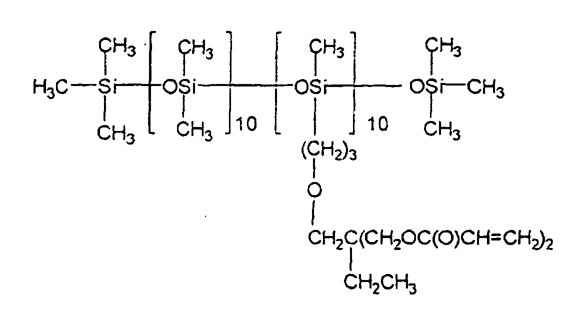

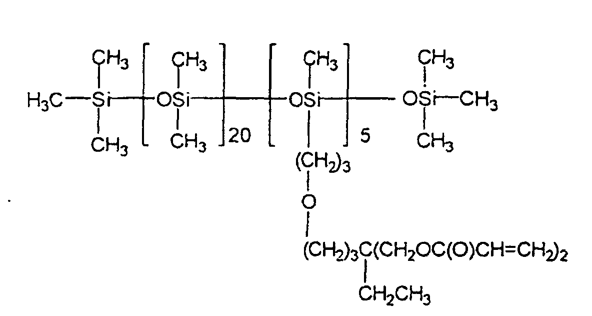

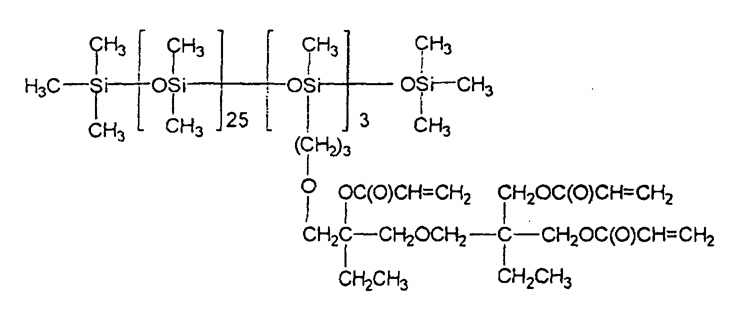

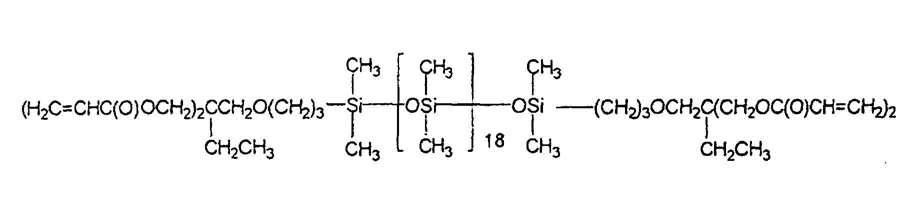

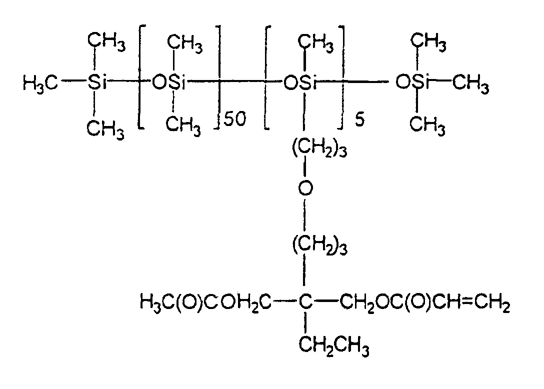

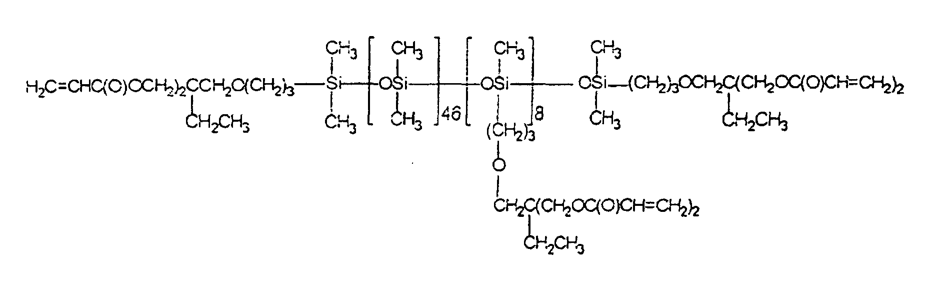

Die Verbindungen können als Additive in strahlenhärtbaren Beschichtungen eingesetzt werden. Sie weisen nicht die Nachteile der Additive des Standes der Technik auf und bewirken in strahlenhärtbaren Beschichtungen eine erhebliche Verbesserung der Kratzfestigkeit und Gleitfähigkeit sowie des Release-Verhaltens. Sie können in üblicher Weise mit Härtungsinitiatoren, Füllstoffen, Pigmenten, anderen an sich bekannten Acrylatsystemen und weiteren üblichen Zusatzstoffen compoundiert werden. Die Verbindungen können dreidimensional durch freie Radikale vernetzt werden und härten thermisch unter Zusatz von z. B. Peroxiden oder unter Einfluß energiereicher Strahlung, wie UV- oder Elektronenstrahlung, innerhalb kürzester Zeit zu mechanisch und chemisch widerstandsfähigen Schichten aus, die bei geeigneter Zusammensetzung der Verbindungen vorbestimmbare abhäsive Eigenschaften aufweisen. Wird als Strahlungsquelle UV- Licht verwendet, erfolgt die Vernetzung vorzugsweise in Anwesenheit von Photoinitiatoren und/oder Photosensibilisatoren, wie z. B. Benzophenon und dessen Derivate, oder Benzoin und entsprechende substituierte Benzoinderivate.

Photoinitiatoren und/oder Photosensibilisatoren werden in den die Organopolysiloxane enthaltenden Zusammensetzungen vorzugsweise in Mengen von 0,01 bis 10 Gew.-%, insbesondere von 0,1 bis 5 Gew.-%, jeweils bezogen auf das Gewicht der acrylatfunktionellen Organopolysiloxane, verwendet.

Nachfolgende Beispiele sollen zur Verdeutlichung der Erfindung dienen, sie stellen jedoch keinerlei Einschränkung dar.

### Beispiel 1

### a) Anlagerung von 1,1,1-Tris-(hydroxymethyl)-propan-monoallylether an ein seitenständig Si-H-funktionelles Siloxan

452 g (+ 30 % Überschuß) 1,1,1-Tris-(hydroxymethyl)-propan-monoallylether werden in einem 1-1-Vierhalskolben, ausgestattet mit Intensivkühler, Thermometer und Tropftrichter, zusammen mit 10 ppm Diaminocyclobutandicarboxylatoplatin als Katalysator in inerter Atmosphäre auf 100 °C aufgeheizt. Bei Erreichen der Temperatur werden 672 g endständig Si-H-funktionalisiertes Polydimethylsiloxan der mittleren Kettenlänge N = 10 und der allgemeinen Formel HMe₂SiO(SiMe₂O)₈SiMe₂H innerhalb von 30 Minuten zugetropft. Nach beendeter Zugabe wird das Reaktionsgemisch noch solange bei 100 °C gerührt, bis nach ca. 3 Std. der Umsatz > 99,5 % erreicht wird.

Nach Filtration von Katalysatorresten und Abdestillation der flüchtigen Reaktionsnebenprodukte bei 150 °C/0,1 bar erhält man ein niedrigviskoses Öl, ca. 350 mPas, dem laut ¹H- und ²⁹Si-NMR-Spektren die allgemeine Formel zukommt:

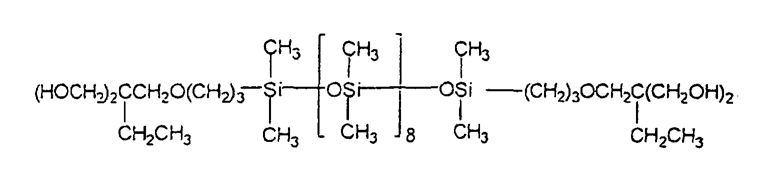

### b) Acrylierung des Bishydroxyalkylsiloxans

In einem 1-1-Vierhalskolben mit Rührer, Tropftrichter und Thermometer werden 325 g des unter 1a) beschriebenen α,ω-Bis-hydroxyalkylsiloxans zusammen mit 230 ml Cyclohexan und 0,35 g Hydroxyanisol auf 65 °C aufgeheizt. Bei dieser Temperatur werden 0,5 % Trifluormethansulfonsäure zugegeben und anschließend insgesamt 135 g Acrylsäure (20 % Überschuß) zugetropft. Das Kondensationswasser wird mittels eines Wasserabscheiders abgetrennt. Die Reaktionsdauer beträgt ca. 3 Stunden. Anschließend wird das Reaktionsgemisch mit einer 2 %igen Natriumcarbonatlösung neutralisiert, filtriert und destilliert.

Gemäß ²⁹Si-NMR- und ¹³C-NMR-spektroskopischer Ergebnisse besitze das Endprodukt nachfolgende Struktur:

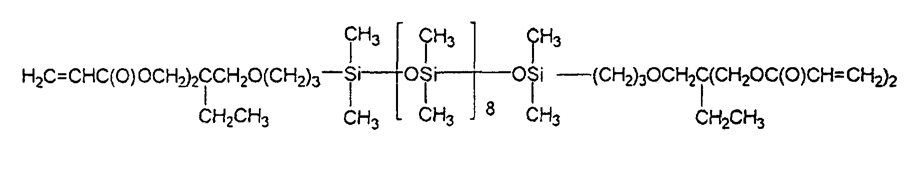

### Beispiel 2

In analoger Weise wie in Beispiel 1 beschrieben werden 238 g eines seitenständig Si-H-funktionalisierten Polydimethylsiloxans der mittleren Kettenlänge N = 10 und der allgemeinen Formel Me₃SiO(SiMe₂O)₅(SiHMe₂)₃SiMe₃ mit 226 g 1,1,1-Tris-(hydroxymethyl)-propanmonoallylether unter Verwendung von 10 ppm cis-Dichlorobis(pyridine)platin und 23 g n-Butanol umgesetzt. Nach 5 Std. Rühren bei 100 °C liegt der Umsatz > 99,5 %.

Zur Veresterung des Hydroxyalkylsiloxans mit Acrylsäure werden analog wie in Beispiel 1b) beschrieben 220 g des endständigen Hydroxyalkylsiloxans mit 53 g Acrylsäure (20 % Überschuß) in 140 ml Cyclohexan unter Zusatz von 100 ppm Methylhydrochinon und 0,5 % Trifluormethansulfonsäure umgesetzt. Die Aufarbeitung des Reaktionsproduktes erfolgt durch Neutralisation mit einer 2 %igen Natriumcarbonatlösung, Filtration und Destillation.

Gemäß ²⁹Si-NMR- und ¹³C-NMR-spektroskopischer Ergebnisse besitzt das Endprodukt nachfolgende Struktur:

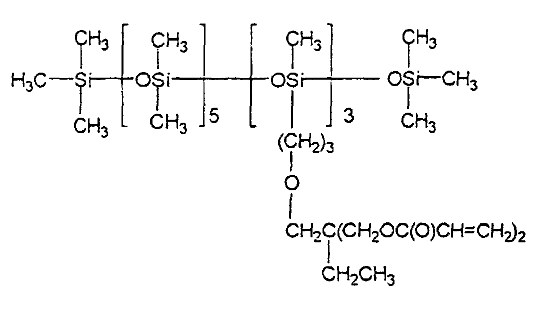

### Beispiel 3

### Equilibrierung von Acrylsäureestergruppen-haltigen Polysiloxanen auf höhere Kettenlängen

150 g der in Beispiel 1b) beschriebenen Verbindung werden zusammen mit 802 g Gemisch aus Octamethylcyclotetrasiloxan und Decamethylcyclopentasiloxan sowie 0,7 g Tri^{f}luorme^{t}hansulfonsäure 10 Stunden bei 60 °C reagieren gelassen. Anschließend werden 14 g Natriumhydrogencarbonat zugegeben und 2 Stunden bei 60 °C Raumtemperatur gerührt. Nach Filtration und Abziehen der flüchtigen Reaktionsprodukte bei 120 °C/0,1 mbar erhält man eine niedrigviskose Flüssigkeit.

Gemäß ²⁹Si-NMR- und ¹³C-NMR-spektroskopischer Ergebnisse besitzt das Endprodukt nachfolgende Struktur:

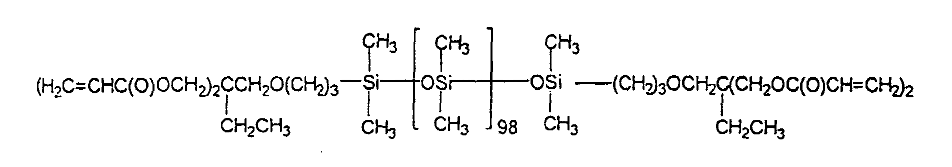

### Beispiel 4

Die Arbeitsweise von Beispiel 1a) wird wiederholt mit der Abänderung, daß anstelle von 1,1,1-Tris-(hydroxymethyl)-propan-monoallylether 4-Ethyl-4-(allyloxymethyl)-2,2-dimethyl-1,3-dioxan eingesetzt wird und auf n-Butanol als Cokatalysator verzichtet wird. Die Hexachloroplatinsäure wird als 2 %ige Lösung zu dem Ethylacetat dosiert.

Die spektroskopische Auswertung mittels ¹³C- und ²⁹Si-NMR des Reaktionsproduktes nach der Aufarbeitung ergibt einen Anteil von Si-O-C-verknüpften Reaktionsprodukten von 90 % und einen Anteil von Si-C-verknüpften Reaktionsprodukten, der unter 10 % liegt.

### Beispiel 5

Die Arbeitsweise von 1b) wird dahingehend abgeändert, daß zur Veresterung von 200 g des unter 2 beschriebenen Bishydroxysiloxans ein Gemisch aus 116 g Acrylsäure und 25 g Essigsäure verwendet wird. Nach vierstündiger Reaktionsdauer und Aufarbeitung wie oben beschrieben wird ein Produkt erhalten, dem nach Auswertung der spektroskopischen Daten folgende Struktur zugeordnet werden kann:

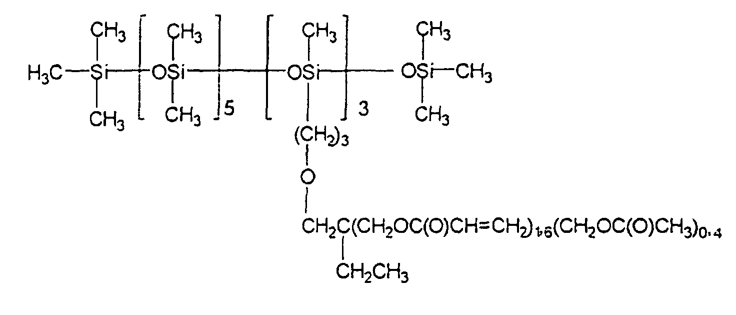

Im folgenden werden die anwendungstechnischen Eigenschaften verschiedener erfindungsgemäß zu verwendender Verbindungen gezeigt.

Zur Überprüfung der anwendungstechnischen Eigenschaften werden die folgenden Druckfarbenrezepturen ausgewählt (Mengenangaben in Gew.-%):

### Rezeptur 1:

| | |
|---|---|
| Setacure 567 | 15,3 Teile aromat. Urethanacrylat, Akzo |
| Secacure 576 | 52,6 Teile aliph. Urethanacrylat, Akzo |
| Tripropylenglycoldiacrylat | 10,1 Teile |
| Heliogen Blue 7080 D | 6,0 Teile Phthalocyaninpigment, BASF |
| Quantacure ITX | 7,5 Teile Photoinitiator, Ciba Geigy |
| Quantacure EPD | 7,5 Teile Photoinitiator, Ciba Geigy |
| Additiv erfindungsgemäß | 1,0 Teile |

### Rezeptur 2:

| | |
|---|---|
| Laromer LR 8946 X | 41,2 Teile aminomod. Oligoetheracrylat, BASF |
| Laromer LR 8869 | 34,8 Teile Polyetheracrylat, BASF |
| Laromer LR 8899 X | 4,7 Teile Polyesteracrylat, BASF |
| Heliogen Blue 7080 D | 11,0 Teile Phthalocyaninpigment, BASF |
| Quantacure ITX | 3,7 Teile Photoinitiator, Ciba Geigy |
| Lucirin TPO | 1,8 Teile Photoinitiator, BASF |
| Esacure TZT | 1,8 Teile Photoinitiator |
| Additiv erfindungsgemäß | 1,0 Teile |

Die Druckfarben werden auf übliche Weise gemäß den vorstehenden Rezepturen formuliert. Als letzter Rezepturbestandteil werden jeweils die Additive hinzugegeben, wobei die Einarbeitung mittels einer Perlmillscheibe eine Minute bei 2500 U/min erfolgt.

Die Druckfarben werden 12 µm naß auf coronavorbehandelter PVC-Folie aufgerakelt. Die Härtung erfolge durch Einwirkung von ultraviolettem Licht (UVH) mit 120 W/cm mit Bahngeschwindigkeiten von 20 m/min. Dieser Vorgang wird jeweils ewiederholt. Für die Ermittlung der Trennwerte wird ein 25 mm breites Klebeband der Firma Beiersdorf verwendet, welches mit Kautschukkleber beschichtet ist und im Handel unter der Bezeichnung Tesa® 4154 erhältlich ist. Zur Messung der Abhäsivität wird 5 Minuten respektive 24 Stunden nach Härtung der Druckfarbe dieses Klebeband mit 70 g/cm² aufgewalzt. Nach dreistündiger Lagerung bei Raumtemperatur wird die Kraft gemessen, die benötigt wird, um das jeweilige Klebeband mit einer Geschwindigkeit von 12 mm/s unter einem Schälwinkel von 180° vom Untergrund abzuziehen. Diese Kraft wird als Trennwert/Release-Wert bezeichnet.

Kratzfestigkeit ist die Widerstandsfähigkeit einer Oberfläche gegenüber sichtbaren, linienförmigen Beschädigungen durch sich bewegende, die Oberfläche berührende, harte Körper. Zur Messung sogenannter Kratzwerte dient ein speziell umgebautes elektromotorisches Filmaufziehgerät. Auf der beweglichen Rakelhalterung ist anstelle des eingelegten Filmziehrakels eine Platte montiert, die am anderen Ende des Gerätes auf Rollen liegt. Mit Hilfe der Rakelhalterung kann die Platte, auf der das Substrat (mit Druckfarbe beschichteter Film) befestigt wird, bewegt werden. Um die Kratzbeanspruchung zu simulieren, wird ein Klotz mit drei Spitzen auf den Druckfarbfilm gesetzt und mit 500 g beschwert. Die auf der Platte befindliche Prüffolie wird mit einer Geschwindigkeit von 12 mm/s unter dem Gewicht weggezogen. Die hierfür notwendige, vertikale Kraft wird gemessen und als Kratzwert bezeichnet. Die Ermittlung der Kratzwerte erfolgt jeweils 24 Stunden nach Aushärtung der Farben.

Ersetzt man den mit Spitzen versehenen Klotz durch einen Klotz mit flächiger Filzunterlage und verfährt man wie zuvor beschrieben, so mißt man als Reibungskraft den sogenannten Gleitwert. Auch diese Prüfungen erfolgen jeweils 24 Stunden nach Aushärtung der Farben.

Die zu überprüfende Verbindung 1 entspricht dem in Beispiel 3 hergestellten Siloxanacrylar. Durch analoge Equilibrierungsreaktionen gelangt man zu den Verbindungen 2 (wie Beispiel 3, nur a = b = 0, c = 120 entsprechend allg. Formel I) und 3 (wie Beispiel 3, nur a = b = 0, c = 150):

**Tabelle 1**

| (Rezeptur 1) | | | | | |
|---|---|---|---|---|---|
| Verbindung | Konz. in Gew.-% | Gleitwert | Kratzwert | Trennwert n. 5 min | Trennwert n. 24 h |
| 1 | 1 | 80 | 64 | 14 | 12 |
| 2 | 1 | 74 | 61 | 12 | 9 |
| 3 | 1 | 72 | 60 | 12 | 8 |
| Blind | | 280 | 290 | >700 | >700 |

**Tabelle 2**

| (Rezeptur 2) | | | | | |
|---|---|---|---|---|---|
| Verbindung | Konz. in Gew.-% | Gleitwert | Kratzwert | Trennwert n. 5 min | Trennwert n. 24 h |
| 1 | 1 | 50 | 49 | 13 | 11 |
| 2 | 1 | 46 | 43 | 16 | 11 |
| 3 | 1 | 38 | 37 | 9 | 7 |
| Blind | | 315 | 305 | >700 | >700 |

## Patentansprüche

1. Verwendung von (Meth)Acrylatgruppen enthaltenden Organopolysiloxanen, die erhältlich sind durch Anlagerung von Organopolysiloxanen der allgemeinen Formel I 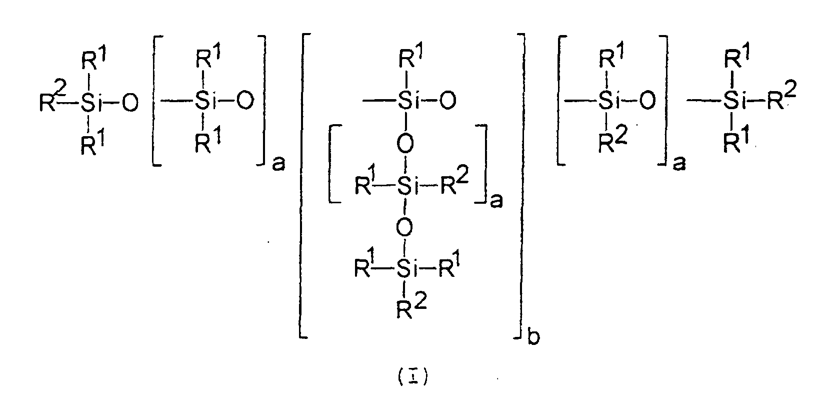
R¹= gleiche oder verschiedene, aliphatische oder aromatische Kohlenwasserstoffreste mit 1 bis 10 C-Atomen,
R² = R¹ oder H, mit der Maßgabe, daß mindestens ein Rest R² gleich H ist,
a = 0 bis 500,
b = 0 bis 5,
an Polyhydroxyalkenylether der allgemeinen Formel II
H₂C=CH-(CH₂)_{c}-O-CH₂-R³-(CH₂-OH)_{d} (II)
R³ = ein ggf. Etherbrücken enthaltender linearer, cyclischer, aromatischer oder verzweigter Kohlenwasserstoffrest mit 1 bis 20 C-Atomen,
c = 0 bis 10,
d = 2 bis 10,
in Gegenwart von Platin- oder Rhodiumkatalysatoren und anschließender Umsetzung mit, bezogen auf Hydroxylgruppen, 0,4-bis 1molaren Mengen (Meth)Acrylsäure und 0- bis 0,6molaren Mengen einer Monocarbonsäure mit 2 bis 10 Kohlenstoffatomen, welche frei von zur Polymerisation befähigten Doppelbindungen ist, unter üblichen Veresterungsbedingungen,
in Konzentrationen von 0,01 bis 10,0 Gew.-% als Additive in strahlenhärtenden Beschichtungen.

## Claims

1. Use of organopolysiloxanes which contain (meth)acrylate groups and are obtainable by addition reaction of organopolysiloxanes of the general formula I 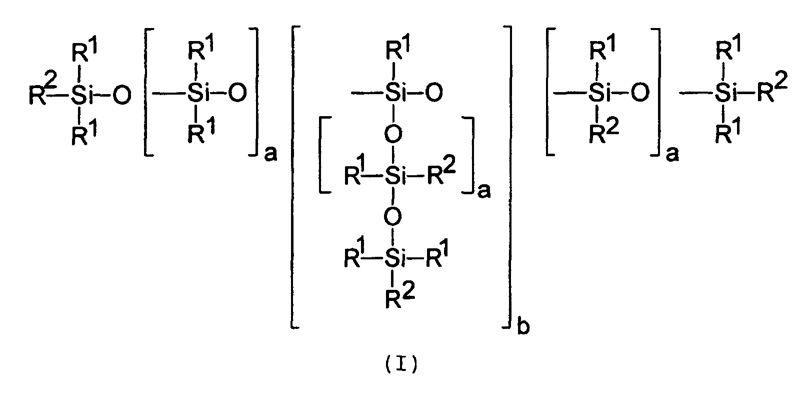
R¹ = identical or different, aliphatic or aromatic hydrocarbon radicals of 1 to 10 carbon atoms,
R² = R¹ or H, with the proviso that at least one radical R² is H,
a = from 0 to 500,
b = from 0 to 5,
with polyhydroxy alkenyl ethers of the general formula II
H₂C=CH-(CH₂)_{c}-O-CH₂-R³-(CH₂-OH)_{d} (II)
R³ = a linear, cyclic, aromatic or branched hydrocarbon radical (with or without ether bridges) of 1 to 20 carbon atoms,
c = from 0 to 10,
d = from 2 to 10,
in the presence of platinum or rhodium catalysts and subsequent reaction with - based on hydroxyl groups - from 0.4- to 1-molar amounts of (meth)acrylic acid and from 0- to 0.6-molar amounts of a monocarboxylic acid of 2 to 10 carbon atoms which is free from double bonds that are capable of undergoing addition polymerization, said subsequent reaction taking place under customary esterification conditions,
in concentrations of from 0.01 to 10.0% by weight as additives in radiation-curing coatings.

## Revendications

1. Utilisation d'organopolysiloxanes contenant des groupes (méth)acrylate, pouvant être obtenus par addition d'organopolysiloxanes de formule générale I 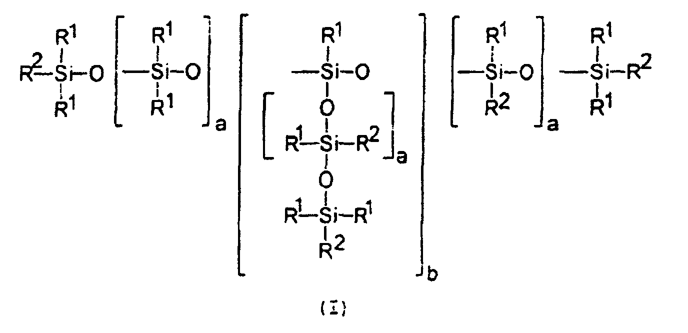 R¹ = radicaux hydrocarbonés identiques ou différents, aliphatiques ou aromatiques, comprenant 1 à 10 atomes de carbone,
R² = R¹ ou H, à condition qu'au moins un radical R² représente H,
a = 0 à 500,
b = 0 à 5,
sur des polyhydroxyalcényléthers de formule générale II
H₂C=CH-(CH₂)_{c}-O-CH₂-R³-(CH₂-OH)_{d} (II)
R³ = un radical hydrocarboné linéaire, cyclique, aromatique ou ramifié contenant le cas échéant des ponts éther, comprenant 1 à 20 atomes de carbone
c = 0 à 10,
d = 2 à 10,
en présence de catalyseurs de platine ou de rhodium, et transformation consécutive avec, par rapport aux groupes hydroxyle, 0,4 à 1 quantité molaire d'acide (méth)acrylique et 0 à 0,6 quantité molaire d'un acide monocarboxylique comprenant 2 à 10 atomes de carbone, qui est exempt de doubles liaisons aptes à une polymérisation, dans les conditions usuelles d'estérification
en des concentrations de 0,01 à 10,0% en poids comme additifs dans des revêtements durcissant sous l'effet de rayons.
